# EUROPEAN PATENT SPECIFICATION

(11) **EP 2 950 639 B1**
(45) Date of publication and mention of the grant of the patent: **08.03.2017**
(21) Application number: 14707233.4
(22) Date of filing: 03.02.2014
(51) Int. Cl.: A01K 27/00

(54) **RETRACTABLE PET LEASH**
ABROLLBARE LEINE
LAISSE RÉTRACTABLE

(30) Priority: 04.02.2013 IT VR20130025
(43) Date of publication of application: 09.12.2015
(73) Proprietor: FERPLAST S.P.A., 36070 Castelgomberto (IT)
(72) Inventor: VACCARI, Carlo, I-36070 Castelgomberto (vi) (IT)
(74) Representative: Sandri, Sandro
(86) International application number: PCT/IB2014/058757
(87) International publication number: WO 2014/118758

(56) References cited:
- DE-U1- 20 108 777
- DE-U1-202013 100 163
- US-A1- 2010 107 992
- US-A1- 2012 079 994

## Description

### TECHNICAL FIELD

The present invention relates to a pet leash of the automatically retractable type fitted with a controlled automatic brake which makes it possible to brake the cord which is fitted on an automatic winder.

In particular the invention refers to a pet leash designed to overcome the problems of the sudden jolting caused by conventional mechanisms which stop the leash cord suddenly in the event of an emergency. To do this the leash has a mechanism which gradually and progressively brakes the cord before locking it completely.

The device according to the present invention uses a cam, operated by a button, which acts directly on the locking mechanism and applies a gradual braking action which is proportional to the pressure applied to the button. As the button is pressed, the cam gradually squashes a brake pad up to a point where the winder is locked.

This invention can be applied in the field of accessories for pets, in particular in the sector for retractable leashes of the type with cords of a variable length.

### BACKGROUND ART

It is known that pets such as dogs of various sizes are taken for walks outdoors using leads and leashes. Some types of leash have a cord or tape of a variable length which is wound up inside a winder held by the user.

This makes it possible for the pet to walk away from its owner without creating any sudden tugging and jolting.

Some models of traditional leashes with a retractable cord are designed with mechanisms which stop the unwinding of the cord so as to stop the pet from going any further beyond the point it has reached. This may be necessary, for example, in those cases where a dog has to be stopped before the leash cord has been completely unwound.

Traditional mechanisms for locking the cord so as to stop the pet at a required distance generally comprise a toothed wheel, fixed co-axially to the winder, which is engaged by a tooth actuated by pressing a button on the handgrip.

One of the drawbacks in the use of traditional retractable leashes is that the tooth operated by pressing the pushbutton instantaneously stops the unwinding of the leash cord thereby creating a sudden jolt which is unpleasant for both the pet and its owner. The force of the jolt increases as the speed of the running pet increases.

Known solutions are described in the patents US2010107992 and WO2012077474. However in both these cases the braking methods are inefficient and both solutions require additional stop components acting on the toothed edges of the winder in order to lock the leash.

Document DE 20108777U1 discloses a lead device for an extending lead for animals, having a stop button in housing operated from outside to stop a roller and a rope/belt at desired positions, as well as a locking device holding the stop button in pressed position.

Document DE 20 2013 100 163 U1 discloses a one-button locking switch for braking and locking a leash wheel of a dog roll leash, having a push button including a projecting pin at a lower side thereof, and a pawl engaging at said leash wheel, whereby a tension spring disengages said pawl from the wheel in normal condition.

Document US 2012/079994 A1 discloses a retractable leash, having a braking mechanism including a gentle stop trigger that is pivotably secured to a casing, and a gentle braking member provided with a slot to receive an outwardly extending pin of a trigger.

### DESCRIPTION OF THE INVENTION

The present invention provides an automatically retractable pet leash with a controlled automatic brake for gradually braking the cord on an automatic winder which makes it possible to eliminate or at least reduce the drawbacks described above.

The present invention also provides an automatically retractable pet leash with a controlled automatic brake for braking the cord on an automatic winder which is both simple to make and truly effective.

This is achieved by an automatically retractable pet leash fitted with means for the regulated, gradual braking of the cord whose features are described in the main claim.

The dependent claims of the solution proposed herein describe advantageous embodiments of the invention.

The principal advantages of this solution, in addition to all those which derive from its simple, easy to manufacture design, primarily concern the fact that the mechanism according to the invention when fitted to a retractable leash, has the advantage in comparison with known solutions that it not only stops the dog but also enables gradually braking and in general offers the major advantage that braking can be regulated according to the situation.

All this is achieved according to the invention by a cam system mounted between the pushbutton and the winder. Pressing the operating pushbutton rotates the cam which thanks to its special profile and the friction-ratchet principle employed gradually squashes the brake pad against the wheel applying a gradual braking action up to the point at which the wheel is completely locked.

### DESCRIPTION OF THE DRAWINGS

Other features and advantages of the invention will become clear on reading the description given below of one embodiment, provided as a non-binding example, with the help of the accompanying drawings, in which:
- Figure 1 is a diagram showing a housing for the retractable leash according to the present invention with the brake locking mechanism in the released position;
- Figure 1a is a diagram showing the front section of the brake locking mechanism according to the present invention;

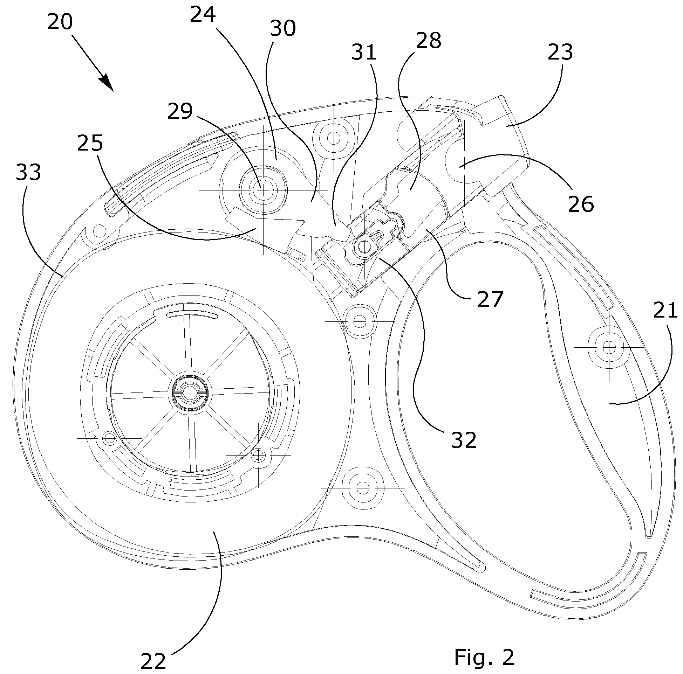

- Figure 2 is a diagram showing a housing for the retractable leash according to the present invention with the brake locking mechanism in the halfway position;

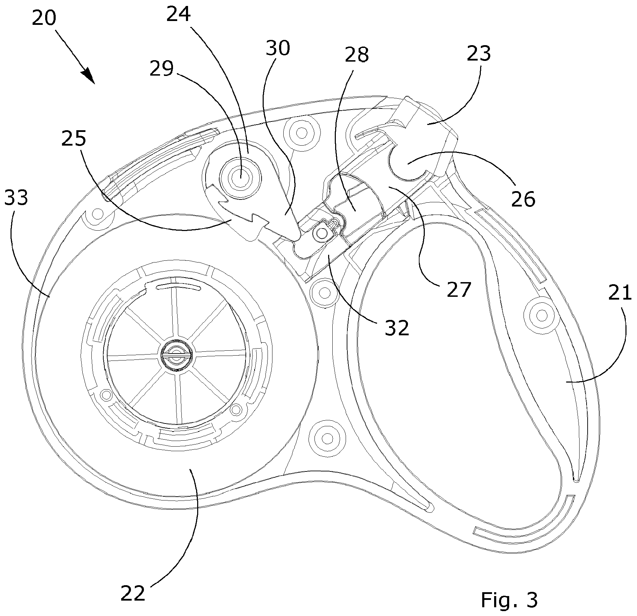

- Figure 3 is a diagram showing a housing for the retractable leash according to the present invention with the brake locking mechanism in the locked position;

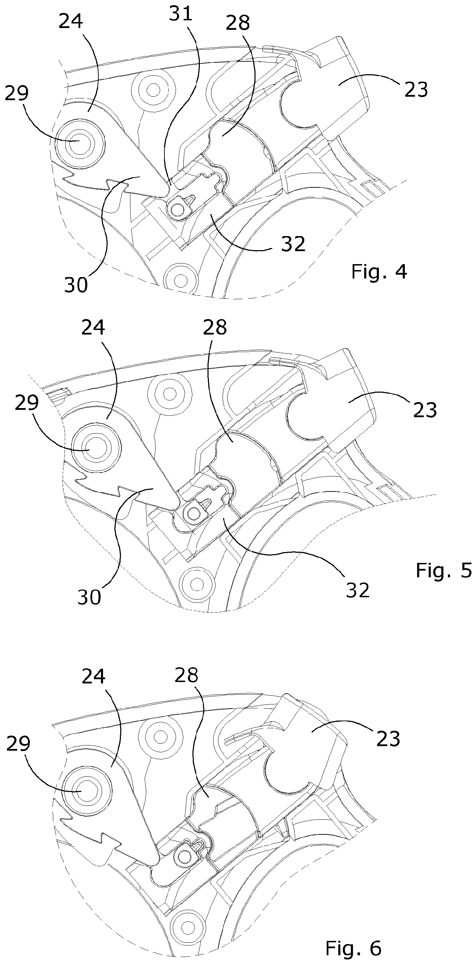

- Figures 4, 5 and 6 are diagrams showing details of the brake components in the three positions respectively of released, halfway and locked;
- Figures 7 and 8 and the detail in Figure 9 are diagrams showing a further embodiment of the invention in its entirety;
- Figures 10 and 11 are front cross-sections on two different planes of the device according to the invention;
- Figures 12 and 13 show two positions of the brake pad, at the start of braking and at the completion of braking, respectively.

### DESCRIPTION OF ONE EMBODIMENT OF THE INVENTION

The accompanying figures show a retractable leash according to the present invention substantially comprising a housing 20 comprising a casing with a hand grip 21 and where inside the casing there is a wheel winder 22 intercepted by a brake mechanism according to the invention operated by a button 23.

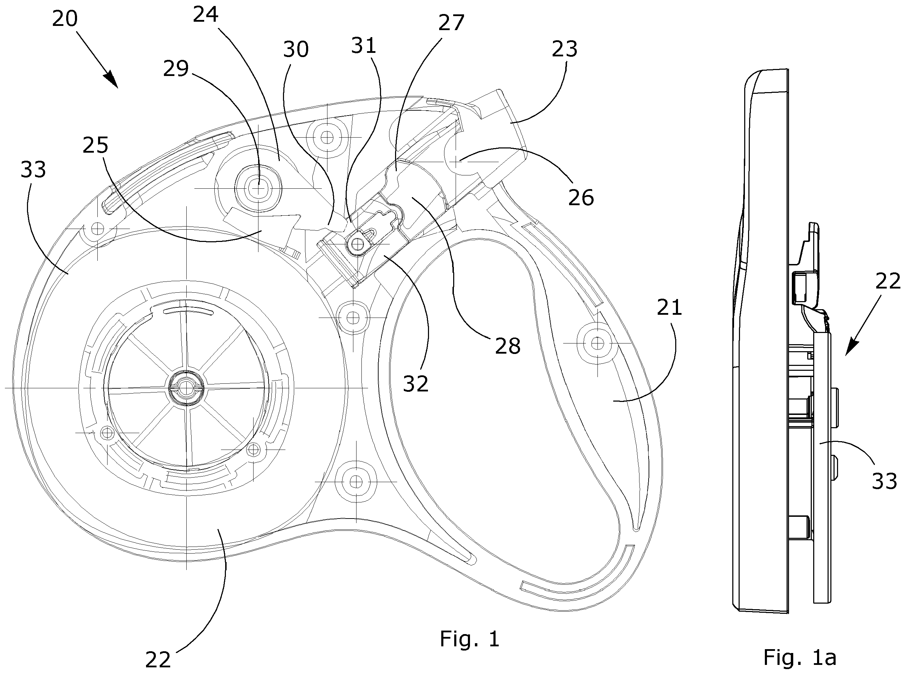

Figure 1 shows that the button 23 does not act directly on the winder but acts on an intermediate cam 24 fitted with a brake pad 25.

In particular, the button 23 is connected by a ball joint 26 to the pusher body 27 which moves when operated by the fingers so that the rotation of the toothed element 28 permanently locks the brake.

To enable permanent stopping in the locked position there is a stop tooth 28 which holds the button in the lowered position.

The cam element 24 pivots on the pin 29 and comprises an appendage 32 which engages in a corresponding indentation 31 made in the appendage 32 connected to the pusher body 27 operated by the button 23.

The part of the cam 24 facing the winder 22 comprises a brake pad 25 which enables the winder to be braked with a slight pressure, taking into account that this type of cam brake is of the self-triggering type, that is, of the type where the locking force of the button is inversely proportional to the braking force.

The brake pad 25 comprises an element made from a material which is preferably elastic, such as bicycle brake rubber, and which operates on the smooth edge 33 of the winder.

In a further possible embodiment, the brake pad 25 is made from a stiff material and in this case the locking action is provided by the particular profile of the cam which can be shaped or knurled.

The winder 22 comprises a reel or bobbin whose central part is wound with the leash cord or tape, while the cam has a pair of pads one of which acts on top of the left edge and the other which acts on the right edge of the winder when looking at the winder from the front and where the cord passes through the cam.

It should be noted that the surface of the reel on which the brake pad 25 acts can have various degrees of roughness depending on the type of material used for the pad.

Preferably the surface of the winder reel can be perfectly smooth or can be slightly roughened to provide more friction or can have slight corrugations to facilitate the locking action.

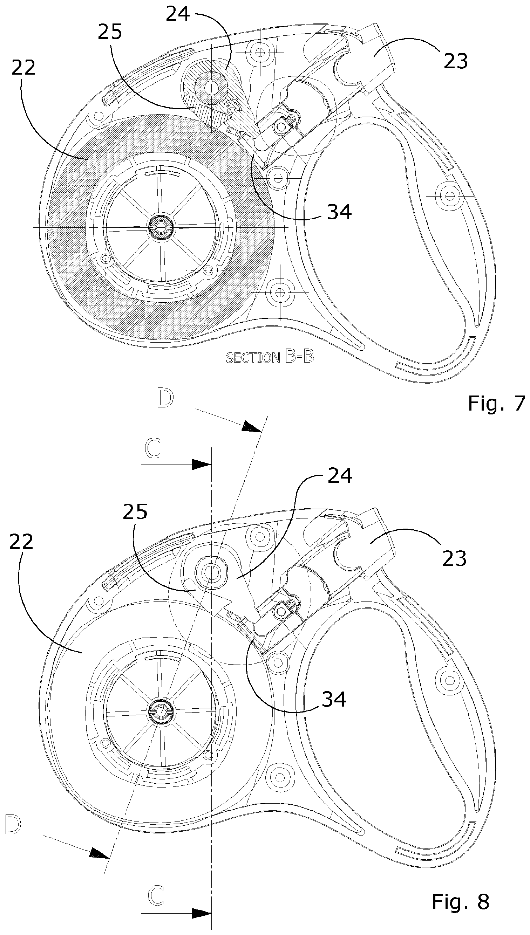

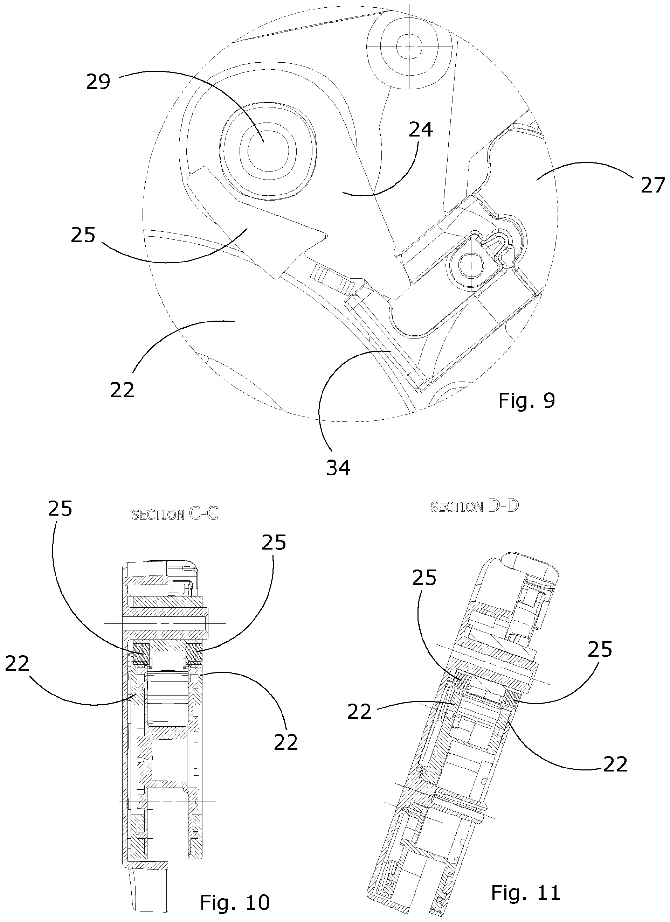

Figures 7, 8 and 9 show a solution where the inside end of the button 23 facing the winder 22 there can be an auxiliary brake pad 34 which acts as a further braking component acting on the winder 22.

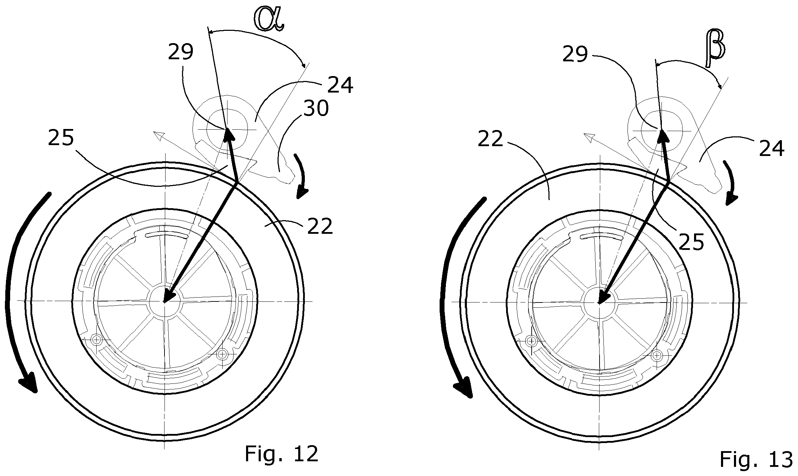

Figures 12 and 13 show that the cam or lever brake mechanism described is of the self-triggering type, that is, of the type where the locking force of the button is inversely proportional to the braking force.

This is due to the fact as shown in Figures 12 and 13 that during unwinding of the cord, the winder 22 rotates anti-clockwise so that the braking mechanism operates as follows:
a) in a first step the pad 25, operated by the cam 24 operated by the button 23, rests and presses on the winder 22 so that the angle "α" is much greater than the friction angle and thereby only performs a braking/slowing action;
b) in a second step following further rotation of the cam 24 and squashing of the brake pad 25, the resting point moves further forward along the circumference of the winder which rotates anti-clockwise in the unwinding direction so that the angle "β" is just slightly greater than the friction angle thereby creating a seizing situation and locking the mechanism but at the same time ensuring that the cam 24 and the brake 25 will return back when the button is released.

As a consequence the part of the cam 24 comprising the brake pad 25 facing the winder 22 enables the winder to be braked with different intensities depending on the position of the button 23 when it is pressed.

It should also be noted that the pad 25 and/or the winder wheel 22 can have incisions along the contact surface designed to discharge any water or dirt which may be present during use.

According to a further embodiment, the braking surface of the pad 25 has a small hole or slot so as to enable improved regulation of braking thanks to the greater deformation of the pad enabled by the hole or the slot.
The invention is described above with reference to a preferred embodiment. It is nevertheless clear that the invention is susceptible to numerous variations which lie within the scope of its disclosure, in the framework of technical equivalents.

## Claims

1. A retractable leash comprising a housing (20) comprising a casing with a hand grip (21) and where inside the casing there is a wheel winder (22) which is intercepted by a brake mechanism which uses a pusher cam (24) rotating on a pin (29), fitted with a brake pad (25), where the brake mechanism is operated by a button (23), **characterised in that** the cam mechanism (24) enables braking of the self-triggering type and where the locking force is inversely proportional to the braking force and where the mechanism operates according to the friction ratchet principle.

2. The retractable leash according to claim 1, **characterised in that** the cam mechanism (24) comprises a 2° degree lever.

3. The retractable leash according to one of the preceding claims, **characterised in that** the cam element (24) pivots on the pin (29) and comprises an appendage (30) which engages in a corresponding indentation (31) made in an appendage (32) connected to the pusher body (27) operated by the button (23).

4. The retractable leash according to one of the preceding claims, **characterised in that** the part of the cam (24) facing the winder (22) comprises a brake pad (25) which enables the winder to be braked with different intensities depending on the position of the button (23) when it is pressed.

5. The retractable leash according to claim 4, **characterised in that** the braking mechanism operates as follows:
a) in a first step the pad (25) rest on the winder (22) so as to apply a braking/slowing action;
b) in a second step the cam (24) is rotated further and the resting point of the pad (25) moves further forward along the circumference of the winder (22) thereby creating a seizing situation and locking the mechanism but at the same time ensuring that the cam (24) will return back by itself when the button (23) is released.

6. The retractable leash according to claims 4 or 5, **characterised in that** the brake pad (25) comprises an element made from a material which is preferably elastic, such as rubber, and which acts on the smooth edge of the winder according to the friction latch principle.

7. The retractable leash according to one of claims 4 to 6, **characterised in that** the pad (25) and/or the winder (22) can have incisions along the contact surface designed to discharge any water or dirt which may be present during use.

8. The retractable leash according to one of claims 4 to 7, **characterised in that** the pad (25) has a small hole or slot so as to enable improved control of braking thanks to the greater deformation of the pad (25) enabled by the hole or the slot.

9. The retractable leash according to one of claims 4 to 8, **characterised in that** the brake pad (25) is made from a stiff material and in this case the locking action is provided by the particular profile of the winder (22) and its edge (33), which is shaped or knurled.

10. The retractable leash according to one of the claims from 3 to 9, **characterised in that** the button (23) is connected by a ball joint (26) to a pusher body (27) which moves when operated by the fingers so that the rotation of a toothed element (28) permanently locks the brake.

11. The retractable leash according to claim 10, **characterised in that** permanent stopping in the locked position is performed by the toothed element (28) which holds the button in the lowered position.

12. The retractable leash according to one of the preceding claims, **characterised in that** the winder (22) comprises a reel or bobbin whose central part is wound with the leash cord or tape, while the cam (24) has a pair of pads which act on the edges of the winder so that in this case the cord passes through the cam.

13. The retractable leash according to claim 12, when dependent on anyone of claims 4 to 9, **characterised in that** the surface of the reel on which the brake pad (25) acts can have various degrees of roughness depending on the type of material used for the pad with the surface being perfectly smooth or slightly roughened to provide more friction or have slight corrugations to facilitate the locking action.

14. The retractable leash according to one of the preceding claims, **characterised in that** the end of the button (23) has an element (34) which only operates when the button (23) is fully pressed down and helps the cam to perform total locking and where this element (34) is made from a soft or rubbery material and has a toothed profile and/or a slot or a hole so as to enable improved control of braking and to reduce the force needed to press the button (23) in order to obtain full locking.

## Patentansprüche

1. Eine abrollbare Leine, umfassend ein Gehäuse (20) umfassend eine Schalung mit einem Handgriff (21) und mit einem, im Inneren der Schalung angeordneten Aufroller (22) welcher mit einem Bremsmechanismus beaufschlagt ist, welcher einen in einem Stift drehbar gelagerten Hebel-Schiebernocken (24), ausgerüstet mit einem Bremsklotz (25) aufweist, wobei der Bremsmechanismus mit einem Drucktaster (23) bedienbar ist,
**dadurch gekennzeichnet,**
**dass** der Hebelmechanismus (24) eine selbstauslösende Bremswirkung ermöglicht und wobei die Verriegelungskraft umgekehrt proportional zur Bremskraft ist und wobei der Mechanismus nach dem Reibungsschluss Prinzip arbeitet.

2. Die abrollbare Leine nach Anspruch 1,
**dadurch gekennzeichnet,**
**dass** der Hebelmechanismus (24) einen 2° Öffnungswinkel aufweist.

3. Die abrollbare Leine nach einem der vorgenannten Ansprüche,
**dadurch gekennzeichnet,**
**dass** das Hebelelement (24) um den Stift (29) schwenkt und einen Fortsatz (30) aufweist welcher in eine korrespondierende Einbuchtung (31), ausgebildet in einem, mit dem Drücker (23) bedienbaren Drückerkörper (27), verbundenen Fortsatz (32) eingreift.

4. Die abrollbare Leine nach einem der vorgenannten Ansprüche,
**dadurch gekennzeichnet,**
**dass** der, dem Aufroller (22) zugewandte Teil des Hebels (24) einen Bremsklotz (25) aufweist welcher dem Aufroller erlaubt mit unterschiedlichen Intensitäten gebremst zu werden, abhängig von der Position des Drückers (23) bei seiner Betätigung.

5. Die abrollbare Leine nach Anspruch 4,
**dadurch gekennzeichnet,**
**dass** die Bremsung wie folgt arbeitet:
a) in einem ersten Schritt ruht der Klotz (25) auf dem Abroller (22) in der Art, eine Bremsungs/Verzögerungs Aktion zu applizieren.
b) in einem zweiten Schritt dreht sich der Hebel (24) weiter und der Ruhepunkt des Klotzes (25) bewegt sich vorwärts entlang des Kreisumfanges des Abrollers (22) wodurch eine Feststellsituation und Blockierung des Mechanismusses erfolgt aber zur gleichen Zeit gewährleistet ist, dass der Hebel (24) selbstständig zurückfährt wenn der Drücker (23) losgelassen ist.

6. Die abrollbare Leine nach Anspruch 4 oder 5,
**dadurch gekennzeichnet,**
**dass** der Bremsklotz (25) ein bevorzugt elastisches Material, wie Gummi, enthält und welches an der glatten Kante des Abrollers nach dem Reibungsschluss Prinzip wirkt.

7. Die abrollbare Leine nach einem der Ansprüche 4 bis 6,
**dadurch gekennzeichnet,**
**dass** der Klotz (25) und/oder der Abroller (22) Einschnitte entlang der Kontaktfläche aufweist über welche beim Gebrauch auftretendes Wasser oder Schmutz abfließen.

8. Die abrollbare Leine nach einem der Ansprüche 4 bis 7,
**dadurch gekennzeichnet,**
**dass** der Klotz (25) ein kleines Loch oder einen Schlitz zur verbesserten Kontrolle der Bremsung aufweist wodurch eine größere Deformation des Klotzes (25), bedingt durch das Loch oder den Schlitz ermöglicht ist.

9. Die abrollbare Leine nach einem der Ansprüche 4 bis 8,
**dadurch gekennzeichnet,**
**dass** der Bremsklotz (25) aus einem steifen Material ausgeführt ist und in diesem Fall die Verriegelung durch ein besonderes Profil des Abrollers (22) und dessen Rand (33), welcher bombiert oder gerändelt ist, erfolgt.

10. Die abrollbare Leine nach einem der Ansprüche 3 bis 9,
**dadurch gekennzeichnet,**
**dass** der Drucktaster (23) mittels eines Kugelgelenks (26) mit dem Drückerkörper (27) verbunden ist welcher sich bei Betätigung mit dem Finger bewegt, so dass die Drehung eines Zahnelements (28) die Bremse permanent verriegelt.

11. Die abrollbare Leine nach Anspruch 10,
**dadurch gekennzeichnet,**
**dass** das permanente Stoppen in der verriegelten Position durch das Zahnelement (28), welches den Drucktaster in der eingedrückten Position hält, erfolgt.

12. Die abrollbare Leine nach einem der vorgenannten Ansprüche,
**dadurch gekennzeichnet,**
**dass** der Abroller (22) aus einer Rolle oder einer Spule besteht, deren zentraler Teil mit einer Leine, Kordel oder Band umwunden ist während der Hebel (24) ein Paar von Klötzen aufweist welche an dem Rand des Abrollers angreifen sodass in diesem Fall das Band durch den Hebel verläuft.

13. Die abrollbare Leine nach Anspruch 12 wenn nach einem der Ansprüche 4 bis 9,
**dadurch gekennzeichnet,**
**dass** die Oberfläche der Spule auf welche der Bremsklotz (25) angreift, abhängig vom verwendeten Material für den Bremsklotz verschiedene Rauheiten aufweist, mit einer perfekt glatten oder geringfügig aufgerauten Oberfläche für mehr Reibung oder leichte Wellenbildung zur Unterstützung der Verriegelungsaktion.

14. Die abrollbare Leine nach einem der vorgenannten Ansprüche,
**dadurch gekennzeichnet,**
**dass** das Ende des Drückertasters (23) ein Element (34) aufweist das nur bei vollständigem Durchdrücken des Drucktasters betätigt wird und hilft, den Hebel total zu blockieren und wobei dieses Element (34) aus einem weichen oder gummierten Material besteht und ein Zahnprofil und/oder einen Schlitz oder ein Loch aufweist um verbesserte Bremskontrolle und eine Kraftreduzierung der Betätigung des Drückertasters zur Erzielung voller Verriegelung ermöglicht.

## Revendications

1. Laisse rétractable comprenant un logement (20) qui comporte un boîtier pourvu d'une poignée (21), le boîtier contenant un enrouleur (22) qui est en interaction avec un mécanisme de freinage qui utilise une came formant poussoir (24) tournant sur un axe (29) et munie d'un patin de freinage (25), le mécanisme de freinage étant commandé par un bouton (23), **caractérisée en ce que** le mécanisme à came (24) permet un freinage du type à déclenchement automatique, et **en ce que** la force de blocage est inversement proportionnelle à la force de freinage, le mécanisme fonctionnant selon le principe du cliquet à friction.

2. Laisse rétractable selon la revendication 1, **caractérisée en ce que** le mécanisme à came (24) comprend un levier de degré 2.

3. Laisse rétractable selon l'une quelconque des revendications précédentes, **caractérisée en ce que** l'élément formant came (24) pivote sur l'axe (29) et comprend un appendice (30) qui s'engage dans une encoche correspondante (31) ménagée dans un appendice 32) relié au corps de poussoir (27) actionné par le bouton (23).

4. Laisse rétractable selon l'une des revendications précédentes, **caractérisée en ce que** la partie de la came (24) tournée vers l'enrouleur (22) comprend un patin de freinage (25) qui permet de freiner l'enrouleur avec des intensités différentes en fonction de la position du bouton (23) lorsqu'il est actionné.

5. Laisse rétractable selon la revendication 4, **caractérisée en ce que** le mécanisme de freinage fonctionne comme suit :
a) dans une première étape, le patin (25) repose sur l'enrouleur (22) de manière à appliquer une action de freinage/ralentissement ;
b) dans une seconde étape, la came (24) est entraînée davantage en rotation et le point de repos du patin (25) se déplace plus avant le long de la circonférence de l'enrouleur (22), créant ainsi une situation de prise et bloquant le mécanisme tout en assurant cependant que la came (24) retourne en arrière d'elle-même lorsque le bouton (23) est relâché.

6. Laisse rétractable selon la revendication 4 ou 5, **caractérisée en ce que** le patin de freinage (25) comprend un élément en un matériau qui est de préférence élastique, tel que du caoutchouc, et qui agit sur le bord lisse de l'enrouleur selon le principe du loquet à friction.

7. Laisse rétractable selon l'une des revendications 4 à 6, **caractérisée en ce que** le patin (25) et/ou l'enrouleur (22) peuvent comporter, le long de la surface de contact, des incisions destinées à évacuer toute eau ou saleté pouvant être présente pendant l'utilisation.

8. Laisse rétractable selon l'une des revendications 4 à 7, **caractérisée en ce que** le patin (25) comporte un petit trou ou une petite fente pour permettre une commande améliorée du freinage grâce à la plus grande déformation du patin (25) permise par le trou ou la fente.

9. Laisse rétractable selon l'une des revendications 4 à 8, **caractérisé en ce que** le patin de freinage (25) est réalisé en un matériau rigide et dans ce cas l'action de blocage est assurée par le profil particulier de l'enrouleur (22) et de son bord (33) qui est conformé ou moleté.

10. Laisse rétractable selon l'une des revendications 3 à 9, **caractérisée en ce que** le bouton (23) est relié par un joint à rotule (26) à un corps de poussoir (27) qui se déplace lorsqu'il est actionné par les doigts de sorte que la rotation d'un élément denté (28) bloque en permanence le frein.

11. Laisse rétractable selon la revendication 10, **caractérisée en ce que** l'arrêt permanent dans la position bloquée est réalisé par l'élément denté (28) qui maintient le bouton dans la position abaissée.

12. Laisse rétractable selon l'une quelconque des revendications précédentes, **caractérisée en ce que** l'enrouleur (22) comprend un dévidoir ou une bobine sur la partie centrale duquel ou de laquelle vient s'enrouler le cordon ou le ruban de la laisse, tandis que la came (24) comporte une paire de patins qui agissent sur les bords de l'enrouleur de sorte que, dans ce cas, le cordon passe à travers la came.

13. Laisse rétractable selon la revendication 12, lorsqu'elle dépend de l'une quelconque des revendications 4 à 9, **caractérisée en ce que** la surface du dévidoir, sur lequel agit le patin de freinage (25), peut posséder divers degrés de rugosité en fonction du type de matériau utilisé pour le patin, la surface étant parfaitement lisse ou légèrement rugueuse pour produire davantage de friction ou comportant de légères ondulations pour faciliter l'action de blocage.

14. Laisse rétractable selon l'une quelconque des revendications précédentes, **caractérisée en ce que** l'extrémité du bouton (23) comporte un élément (34) qui ne fonctionne que lorsque le bouton (23) est totalement pressé vers le bas et permet à la came d'effectuer un blocage total et **en ce que** cet élément (34) est réalisé en un matériau souple ou caoutchouteux et possède un profil denté et/ou une fente ou un trou de manière à permettre une commande améliorée du freinage et à réduire la force nécessaire pour presser sur le bouton (23) afin d'obtenir un blocage total.
